# EUROPEAN PATENT APPLICATION

(11) **EP 2 958 398 A1**
(43) Date of publication of application: **23.12.2015**
(21) Application number: 14751397.2
(22) Date of filing: 14.02.2014
(51) Int. Cl.: H04W 92/18, H04W 88/06

(54) **COMMUNICATION SYSTEM, CONTROL APPARATUS, APPLICATION SERVER AND DEVICE**

(30) Priority: 15.02.2013 JP 2013028434
(71) Applicant: NTT DOCOMO, INC., Chiyoda-ku Tokyo 100-6150 (JP)
(72) Inventor: MOON, Sung Uk, Tokyo 100-6150 (JP); NISHIDA, Katsutoshi, Tokyo 100-6150 (JP)
(74) Representative: Hoffmann Eitle
(86) International application number: PCT/JP2014/053457
(87) International publication number: WO 2014/126195

(57) **Abstract**

An object is to increase the efficiency of transmission of M2M communication data by restricting the M2M communication in accordance with the communication condition of an access network 2. In a communication system according to the present invention, the access network 2 is configured to transmit instruction information which specifies the communication methods of M2M applications 30, to any of an M2M platform 1, M2M application servers #1 to #N, and M2M devices #1/#11/#12 in accordance with the communication condition. The M2M platform 1 is configured to control the communication methods of the M2M applications 30 on the basis of the instruction information.

## Description

### TECHNICAL FIELD

The present invention relates to a communication system, a control apparatus, an application server, and a device.

### BACKGROUND ART

A communication system, in which machines connected to a network can communicate with each other without human intervention, has been known. Such communication is called "M2M (Machine-to-Machine) communication."

In the communication system as described above, M2M communication is performed by a M2M application in an M2M device and an M2M application server.

### PRIOR ART DOCUMENT

### NON-PATENT DOCUMENTS

Non-patent document 1: 3GPP TS22.011
Non-patent document 2: ETSI TS 102 690

### SUMMARY OF THE INVENTION

Here, in conventional communication systems, the M2M application in the M2M device and the M2M application server do not have any means for exchanging information on the condition of their access network. Thus, there has been a problem in that, for example, even in a condition where M2M communication data cannot be properly exchanged due to increase in the load on the access network or the like, the M2M application in the M2M device and the M2M application server start M2M communication and thereby further increase the load on the access network.

Meanwhile, the access network has means for restricting M2M communication via access regulation. However, this access regulation can be initiated only after the access network is congested.

Moreover, there has been a problem in that some means for restricting M2M communication cannot effectively restrict the communication of the M2M application in the M2M device when the access network is congested, for some reasons such as the necessity of signal exchange between the M2M device and the access network to initiate the access regulation.

In addition, under a normal communication condition, the access regulation described above is incapable of increasing the frequency, data amount, and the like of data transmission by the M2M application in accordance with the communication condition such as the congestion level of the access network.

The present invention has therefore been made in view of the above problems, and an object thereof is to provide a communication system, a control apparatus, an application server, and a device which are capable of increasing the efficiency of transmission of M2M communication data by controlling the M2M communication in accordance with the communication condition of an access network.

Another object of the present invention is to provide a communication system, a control apparatus, an application server, and a device which are capable of, under a normal communication condition, increasing the frequency, data amount, and the like of data transmission by an M2M application in accordance with the communication condition such as the congestion level of an access network.

A first feature of the present invention is summarized as a communication system, including: an access network; a machine-to-machine communication platform; a machine-to-machine communication application server connected to the machine-to-machine communication platform; and a device including a machine-to-machine communication application. Here, the access network is configured to transmit instruction information which specifies a communication method of the machine-to-machine communication application, to at least one of the access network, the machine-to-machine communication platform, and the machine-to-machine communication application server in accordance with a communication condition, and the machine-to-machine communication platform is configured to control the communication method of the machine-to-machine communication application on the basis of the instruction information.

A second feature of the present invention is summarized as a control apparatus which is configured to be used in a communication system including an access network, a machine-to-machine communication platform, a machine-to-machine communication application server connected to the machine-to-machine communication platform, and a device including a machine-to-machine communication application, and is configured to control the access network, including: a detection unit configured to detect a communication condition of the access network; and a transmission unit configured to transmit instruction information which specifies a communication method of the machine-to-machine communication application, to at least one of the access network, the machine-to-machine communication platform, and the machine-to-machine communication application server in accordance with the communication condition of the access network.

A third feature of the present invention is summarized as an application server configured to operate as a machine-to-machine communication application server in a communication system including an access network, a machine-to-machine communication platform, the machine-to-machine communication application server connected to the machine-to-machine communication platform, and a device including a machine-to-machine communication application, including: a reception unit configured to receive instruction information which specifies a communication method of the machine-to-machine communication application, from the access network; and a control unit configured to control the communication method of the machine-to-machine communication application on the basis of the instruction information.

A fourth feature of the present invention is summarized as a device including a machine-to-machine communication application and configured to be used in a communication system including an access network, a machine-to-machine communication platform, and a machine-to-machine communication application server connected to the machine-to-machine communication platform, wherein the machine-to-machine communication application includes: a reception unit configured to receive instruction information which specifies a communication method of the machine-to-machine communication application, from any of the access network, the machine-to-machine communication platform, and the machine-to-machine communication application server; and a control unit configured to control the communication method of the machine-to-machine communication application on the basis of the instruction information.

### BRIEF DESCRIPTION OF THE DRAWINGS

[Fig. 1] Fig. 1 is an overall configurational view of a communication system according to a first embodiment of the present invention.
[Fig. 2] Fig. 2 is a functional block diagram of a control apparatus 2A according to the first embodiment of the present invention.
[Fig. 3] Fig. 3 is a functional block diagram of M2M application servers #1 to #N according to the first embodiment of the present invention.
[Fig. 4] Fig. 4 is a functional block diagram of M2M devices #1/#11/#12 according to the first embodiment of the present invention.

### MODE FOR CARRYING OUT THE INVENTION

### [Communication System According to First Embodiment of Present Invention]

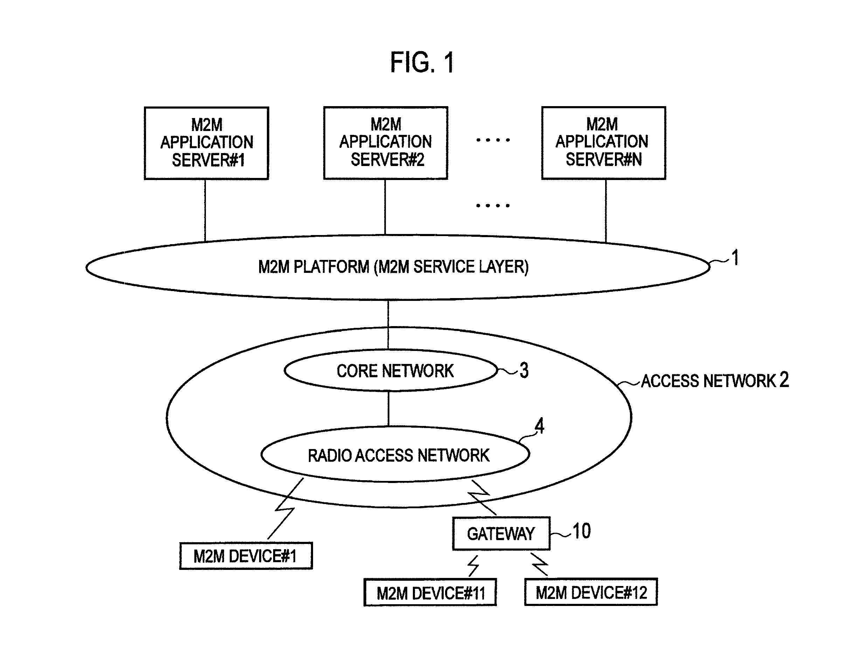

A communication system according to a first embodiment of the present invention will be described with reference to Figs. 1 to 4. Note that the communication system according to this embodiment includes at least one of a wired communication network and a wireless communication network.

The communication system according to the first embodiment of the present invention will be described with reference to Fig. 1. This embodiment will be described by illustrating a W-CDMA or LTE (Long Term Evolution) access network as an access network according to this embodiment. However, the present invention is applicable to access networks of other schemes than W-CDMA and LTE.

As shown in Fig. 1, the communication system according to this embodiment includes: an M2M platform (M2M service layer) 1; an access network 2; M2M application servers #1 to #N connected to the M2M platform 1; M2M devices #1/#11/#12 each including an M2M application (for example, an application for transmitting read data of a smart meter or an application for transmitting inventory management data of a vending machine) 30.

Here, the M2M device #1 is configured to be connected to the access network 2 directly whereas the M2M devices #11/#12 are configured to be connected to the access network 2 through a gateway 10.

Moreover, the access network 2 is formed by a core network (CN) 3 and a radio access network (RAN) 4.

Note that the access network 2 is provided with a control apparatus 2A configured to control the access network 2. Here, there may be provided a control apparatus 2A configured to control the core network 3 and another control apparatus 2A configured to control the radio access network 4.

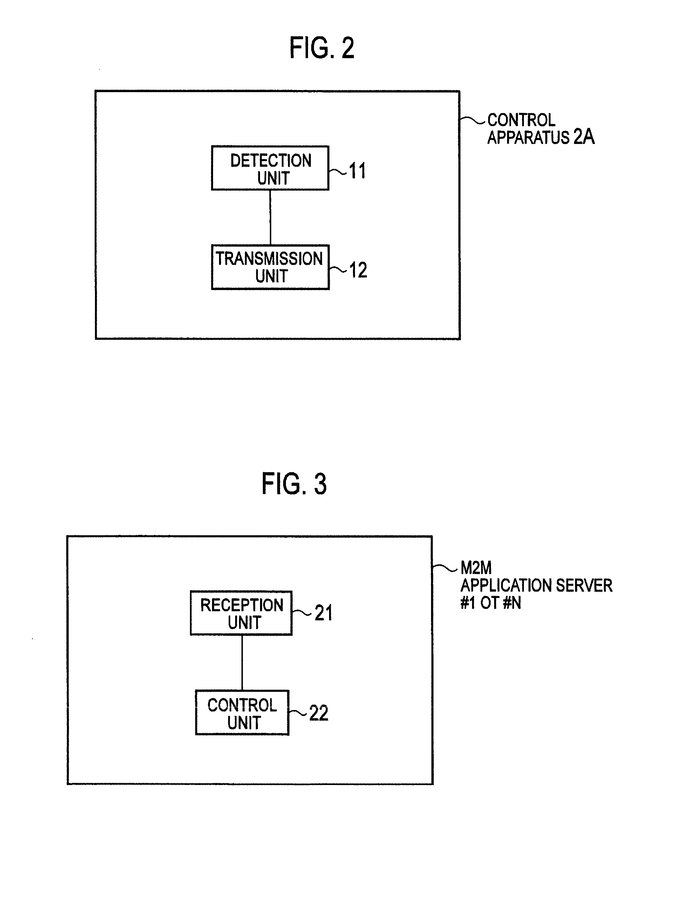

As shown in Fig. 2, the control apparatus 2A includes a detection unit 11 and a transmission unit 12.

The detection unit 11 is configured to detect the communication condition of the access network 2.

For example, the detection unit 11 is configured to detect communication quality information such as the load on or the communication success rate in the core network or the radio access network as the communication condition.

The transmission unit 12 is configured to transmit instruction information which specifies the communication methods of the M2M applications 30 (the data transmission frequency, transmission amount, and retransmission timing, and the content to be transmitted) to at least one of the M2M platform 1, the M2M application servers #1 to #N, and the M2M devices #1/#11/#12 in accordance with the communication condition of the access network 2.

This instruction information may be configured to be capable of specifying a specific service class or a specific application.

Note that the transmission unit 12 may be configured to determine whether or not to control the communication methods of the M2M applications 30 or to determine the contents of the communication methods of the M2M applications 30 on the basis of the communication condition detected by the detection unit 11.

Here, the transmission unit 12 may be configured not to transmit the above-mentioned instruction information if determining that controlling the communication methods of the M2M applications 30 is not necessary.

For example, the transmission unit 12 is configured to transmit the above-mentioned instruction information to at least one of the M2M platform 1, the M2M application servers #1 to #N, and the M2M devices #1/#11/#12 to control the communication method of a particular M2M application 30 or of all the M2M applications 30 when the detection unit 11 detects that the load on the access network 2 is greater than the maximum allowable capacity (70%, for example).

Here, the above-mentioned data transmission frequency contains information for turning off the M2M communication or suspending the M2M communication for a predetermined period of time.

Moreover, the transmission unit 12 is also capable of transmitting instruction information for limiting the possible size and rate of data transmission to, for example, 1 Mbyte or smaller and 1 Mbps or lower, respectively.

Note that the detection unit 11 and the transmission unit 12 may be provided to both the control apparatus 2A configured to control the core network 3 and the control apparatus 2A configured to control the radio access network 4.

Moreover, the transmission unit 12 may be configured to generate and transmit the above-mentioned instruction information based on a past communication condition or a predicted future communication condition of the access network.

As shown in Fig. 3, the M2M application servers #1 to #N each include a reception unit 21 and a control unit 22.

The reception unit 21 is configured to receive the above-mentioned instruction information from the access network 2.

The control unit 22 is configured to control the communication methods of the M2M applications 30 (the data transmission frequency, transmission amount, and retransmission timing, and the content to be transmitted) on the basis of the instruction information received by the reception unit 21.

For example, upon receipt of instruction information from the access network 2 as an instruction to control the M2M communication of a specific M2M application 30, the control unit 22 may be configured to operate such that the M2M application servers #1 to #N or the M2M platform 1 stops the transmission of M2M communication data by the specific M2M application 30, or holds the M2M communication data of the specific M2M application 30 for a predetermined period of time and then transmits the M2M communication data, or changes the data amount and rate of transmission of the M2M communication data by the specific M2M application 30, on the basis of the instruction information.

Moreover, the control unit 22 may be configured to change the timing at which the M2M communication data is retransmitted in the case where it fails to be transmitted.

Moreover, the above-mentioned instruction information may contain information for starting the transmission of the M2M communication data by the specific M2M application 30, or information for increasing the data amount and rate of the transmission of the M2M communication data by the specific M2M application 30.

Note that the control unit 22 may be configured to inquire of the access network 2 for the instruction information and the communication condition of the access network 2.

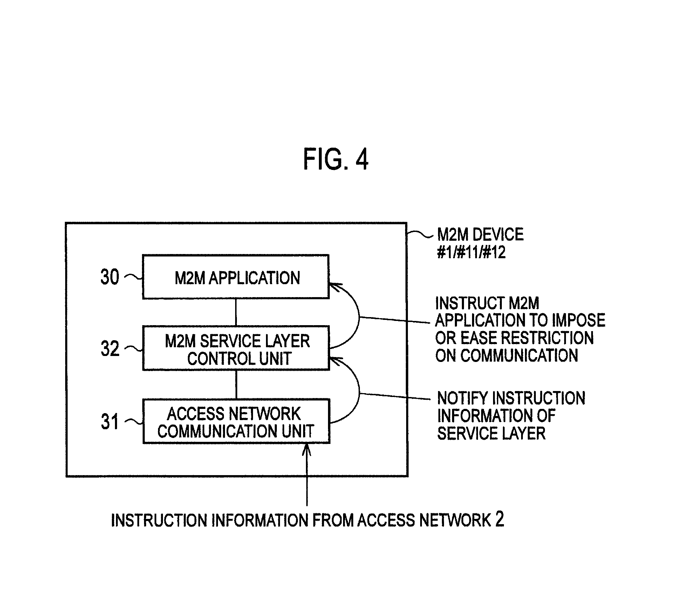

As shown in Fig. 4, the M2M devices #1/#11/#12 each include an M2M application 30, an access network communication unit 31, and an M2M service layer control unit 32.

The access network communication unit 31 is configured to receive the above-mentioned instruction information from any of the access network 2, the M2M platform 1, and the M2M application servers #1 to #N.

Moreover, the M2M service layer control unit 32 is configured to control the communication method of the M2M application 30 (the data transmission frequency, transmission amount, and retransmission timing, and the content to be transmitted) on the basis of the instruction information received by the access network communication unit 31.

Note that the access network communication unit 31 may be configured to inquire of any of the access network 2, M2M platform 1, and the M2M application servers #1 to #N for the above-mentioned instruction information and the communication condition of the access network 2.

Here, the control apparatus 2A may be configured to transmit instruction information which specifies a service class and an application, to at least one of the M2M application servers #1 to #N, the M2M platform 1, and the M2M devices #1/#11/#12 to thereby control the communication method of the M2M application 30 corresponding to the service class and application, i.e. to instruct imposition or easing of restriction on the communication by the M2M application 30.

This instruction information may be transmitted from the control apparatus 2A (access network 2) to at least one of the M2M devices #1/#11/#12, the M2M platform 1, and the M2M application servers #1 to #N.

For example, in the case where the instruction information is transmitted from the access network 2 to the M2M devices #1/#11/#12, the M2M devices #1/#11/#12 impose or ease restriction on the communication of their M2M applications 30 corresponding to the service class specified by the instruction information.

Here, the imposition and easing of restriction may be done by using a logic which follows a preconfiguration, or by following information notified by the instruction information.

In the case of easing the restriction on the communication by the M2M application 30, the instruction information may specify the content of large-volume M2M communication data to be transmitted (such as update information on the M2M application 30 or the OS) so that this data which has been stopped from being transmitted under a normal communication condition due to its impact on the load on the access network 2 can be transmitted.

Note that the above-mentioned preconfiguration may be done by done by one or more of a device management signal from the access network 2, a predetermined signal from the M2M platform 1, and predetermined M2M application servers #1 to #N.

Upon receipt of pieces of instruction information which specify specific service classes from two or more of the M2M application servers #1 to #N, the M2M platform 1 may bundle the pieces of instruction information which specify the same service class and transmit them to the M2M devices #1/#11/#12.

Alternatively, the control apparatus 2A (access network 2) may be configured to uniformly transmit the same instruction information without specifying the service class.

Here, in the case where the destination to transmit the instruction information is the M2M devices #1/#11/#12, the M2M devices #1/#11/#12 may control the communication methods of their specific M2M applications 30 by following a logic specified by the M2M platform 1 or the M2M application servers #1 to #N.

Moreover, in the case where the destination to transmit the instruction information is the M2M platform 1, the M2M platform 1 may control the communication method of a specific M2M application 30 by following a logic specified by the M2M application servers #1 to #N, or control the communication methods of the M2M applications 30 in the M2M devices #1/#11/#12 by transmitting the instruction information to the M2M devices #1/#11/#12.

Alternatively, in the case where the destination to transmit the instruction information is the M2M application servers #1 to #N, the M2M application servers #1 to #N may control the communication method of a specific M2M application 30, or control the communication methods of the M2M applications 30 in the M2M devices #1/#11/#12 by transmitting the instruction information to the M2M devices #1/#11/#12.

Here, the controlling of the communication method of the M2M application 30 in each M2M device #1/#11/#12 may be done by the M2M service layer control unit 32 which is at a higher level than the access network communication unit 31 configured to control the communication module.

In this case, the M2M service layer control unit 32 may receive the above-mentioned instruction information from at least one of the communication module, the M2M platform 1, and the M2M application servers #1 to #N.

Moreover, in the above case, the M2M service layer control unit 32 may transmit the instruction information to a communication application connected inside the M2M device #1/#11/#12 or outside the M2M device #1/#11/#12.

In this case, the M2M application 30 follows the received instruction information to control the communication method, for example, to change the data transmission frequency, transmission amount, and retransmission timing, and the content to be transmitted.

The M2M devices #1/#11/#12 may autonomously determine whether or not to control the communication methods of the M2M devices #1/#11/#12. In this case, their M2M service layer control units 32 may make this determination.

Note that in conventional M2M communication, the carrier cannot control the operation of the M2M applications 30 and the M2M application servers #1 to #N.

For this reason, in the conventional M2M communication, only temporary congestion can be avoided. This has lead to problems in that a large amount of access occurs at once when the communication regulation is released, and regulation information needs to be notified all the time to avoid congestion, thus making the access regulation in the access network 2 complicated.

With the communication system according to this embodiment, it is possible to solve these problems.

Moreover, there has been a problem in the convention M2M communication in that a large load will be imposed on the access network 2 and the communication quality in the access network 2 will be lowered if a new M2M device attempts to start connecting while many M2M devices #1/#11/#12 are already communicating through the access network 2.

With the communication system according to this embodiment, it is possible to solve this problem as well.

Specifically, with the communication system according to this embodiment, it is possible to control the communication method of the M2M application 30 corresponding to a specific service class or of a specific M2M application 30 by causing the access network 2 to notify the instruction information which specifies the communication method of the M2M communication in accordance with the communication condition of the access network 2; moreover, it is possible to reduce the load on the access network with the instruction information which changes the communication methods to be implemented by the M2M platform 1 and the M2M application servers #1 to #N for the M2M devices #1/#11/#12.

Note that the above-mentioned functions are not limited to M2M communication and may be applied to normal communication having similar functions.

The features of the present embodiment may also be expressed as follows.

A first feature of the present embodiment is summarized as a communication system, including: an access network 2; an M2M platform (machine-to-machine communication platform) 1; M2M application servers (machine-to-machine communication application servers) #1 to #N connected to the M2M platform 1; and M2M devices #1/#11/#12 including an M2M application (machine-to-machine communication application) 30. Here, the access network 2 is configured to transmit instruction information which specifies a communication method of the M2M application, to at least one of the M2M platform 1, the M2M application servers #1 to #N, and the M2M devices #1/#11/#12 in accordance with a communication condition, and the M2M platform 1 is configured to control the communication method of the M2M application 30 on the basis of the instruction information.

In the first feature of the present embodiment, the instruction information may be configured to be capable of specifying a service class or an application, and the M2M devices #1/#11/#12 is configured to control the communication method of the M2M application 30 corresponding to the service class or the application specified by the instruction information.

In the first feature of the present embodiment, the M2M platform 1 may be configured to be capable of making a setting on whether or not to enable the M2M devices #1/#11/#12 to receive the instruction information.

In the first feature of the present embodiment, the M2M platform 1 may be configured to be capable of making a setting on how the M2M devices #1/#11/#12 operates when receiving the instruction information.

In the first feature of the present embodiment, the controlling of the communication method may be to control the M2M application 30 in terms of a data transmission frequency, transmission amount, and retransmission timing, and a content to be transmitted.

A second feature of the present embodiment is summarized as a control apparatus 2A which is configured to be used in a communication system including an access network 2, an M2M platform 1, M2M application servers #1 to #N connected to the M2M platform 1, and M2M devices #1/#11/#12 including an M2M application 30, and is configured to control the access network 2, including: a detection unit 11 configured to detect a communication condition of the access network 2; and a transmission unit 12 configured to transmit instruction information which specifies a communication method of the M2M application 30, to at least one of the M2M platform 1, the M2M application servers #1 to #N, and the M2M devices #1/#11/#12 in accordance with the communication condition of the access network 2.

A third feature of the present embodiment is summarized as an application server configured to operate as an M2M application servers #1 to #N in a communication system including an access network 2, an M2M platform 1, M2M application servers #1 to #N connected to the M2M platform 1, and M2M devices #1/#11/#12 including an M2M application 30, including: a reception unit 21 configured to receive instruction information which specifies a communication method of the M2M application, from the access network 2; and a control unit 22 configured to control the communication method of the M2M application 30 on the basis of the instruction information.

In the third feature of the present embodiment, the control unit 22 may be configured to inquire of the access network 2 for the instruction information.

A fourth feature of the present embodiment is summarized as M2M devices #1/#11/#12 including an M2M application 30 and configured to be used in a communication system including an access network 2, an M2M platform 1, and M2M application servers #1 to #N connected to the M2M platform 1. Here, the M2M application 30 includes: an access network communication unit (reception unit) 31 configured to receive instruction information which specifies a communication method of the M2M application, from any of the access network 2, the M2M platform 1, and the M2M application servers #1 to #N; and an M2M service layer control unit (control unit) 32 configured to control the communication method of the M2M application on the basis of the instruction information.

In the fourth feature of the present embodiment, the application communication unit 31 may be configured to inquire of any of the access network 2, the M2M platform 1, and the M2M application servers #1 to #N for the instruction information.

It should be noted that the foregoing operations of the M2M devices #1/#11/#12, the control apparatus 2A, and the M2M application servers #1 to #N may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the M2M devices #1/#11/#12, the control apparatus 2A, and the M2M application servers #1 to #N. Otherwise, the storage medium and the processor may be provided as discrete components inside the M2M devices #1/#11/#12, the control apparatus 2A, and the M2M application servers #1 to #N.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the spirit and scope of the present invention, which are determined by the description of the scope of claims. Therefore, the description of the specification is intended for illustrative explanation only and does not impose any limited interpretation on the present invention.

Note that the entire content of Japanese Patent Application No. 2013-028434 (filed on February 15, 2013) is incorporated by reference in the present specification.

### INDUSTRIAL APPLICABILITY

As described above, according to the present invention, it is possible to provide a communication system, a control apparatus, an application server, and a device which are capable of increasing the efficiency of transmission of M2M communication data by controlling the M2M communication in accordance with the communication condition of an access network.

Moreover, according to the present invention, it is possible to provide a communication system, a control apparatus, an application server, and a device which are capable of, under a normal communication condition, increasing the frequency, data amount, and the like of data transmission by an M2M application in accordance with the communication condition such as the congestion level of an access network.

### EXPLANATION OF THE REFERENCE NUMERALS

- 1: M2M platform (M2M service layer)
- 2: access network
- 2A: control apparatus
- 3: core network
- 4: radio access network
- 10: gateway
- 11: detection unit
- 12: transmission unit
- 21: reception unit
- 22: control unit
- 30: M2M application
- 31: access network communication unit
- 32: M2M service layer control unit

## Claims

1. A communication system, comprising:
an access network;
a machine-to-machine communication platform;
a machine-to-machine communication application server connected to the machine-to-machine communication platform; and
a device including a machine-to-machine communication application, wherein
the access network is configured to transmit instruction information which specifies a communication method of the machine-to-machine communication application, to at least one of the machine-to-machine communication platform, the machine-to-machine communication application server, and the device in accordance with a communication condition, and
the device is configured to control the communication method of the machine-to-machine communication application on the basis of the instruction information.

2. The communication system according to claim 1, wherein
the instruction information is configured to be capable of specifying a service class or an application, and
the device is configured to control the communication method of the machine-to-machine communication application corresponding to the service class or the application specified by the instruction information.

3. The communication system according to claim 1 or 2, wherein the machine-to-machine communication platform is configured to be capable of making a setting on whether or not to enable the device to receive the instruction information.

4. The communication system according to any one of claims 1 to 3, wherein the machine-to-machine communication platform is configured to be capable of making a setting on how the device operates when receiving the instruction information.

5. The communication system according to any one of claims 1 to 4, wherein the controlling of the communication method is to control the machine-to-machine communication application in terms of a data transmission frequency, transmission amount, and retransmission timing, and a content to be transmitted.

6. A control apparatus which is configured to be used in a communication system including an access network, a machine-to-machine communication platform, a machine-to-machine communication application server connected to the machine-to-machine communication platform, and a device including a machine-to-machine communication application, and is configured to control the access network, comprising:
a detection unit configured to detect a communication condition of the access network; and
a transmission unit configured to transmit instruction information which specifies a communication method of the machine-to-machine communication application, to at least one of the machine-to-machine communication platform, the machine-to-machine communication application server, and the device in accordance with the communication condition of the access network.

7. An application server configured to operate as a machine-to-machine communication application server in a communication system including an access network, a machine-to-machine communication platform, the machine-to-machine communication application server connected to the machine-to-machine communication platform, and a device including a machine-to-machine communication application, comprising:
a reception unit configured to receive instruction information which specifies a communication method of the machine-to-machine communication application, from the access network; and
a control unit configured to control the communication method of the machine-to-machine communication application on the basis of the instruction information.

8. The application server according to claim 7, wherein the control unit is configured to inquire of the access network for the instruction information.

9. A device including a machine-to-machine communication application and configured to be used in a communication system including an access network, a machine-to-machine communication platform, and a machine-to-machine communication application server connected to the machine-to-machine communication platform, wherein the machine-to-machine communication application includes:
a reception unit configured to receive instruction information which specifies a communication method of the machine-to-machine communication application, from any of the access network, the machine-to-machine communication platform, and the machine-to-machine communication application server; and
a control unit configured to control the communication method of the machine-to-machine communication application on the basis of the instruction information.

10. The device according to claim 9, wherein the control unit is configured to inquire of any of the access network, the machine-to-machine communication platform, and the machine-to-machine communication application server for the instruction information.
